# EUROPEAN PATENT APPLICATION

(11) **EP 1 489 768 A2**
(43) Date of publication of application: **22.12.2004**
(21) Application number: 04011559.4
(22) Date of filing: 14.05.2004
(51) Int. Cl.: H04J 14/02

(54) **Optical add/drop multiplexer using circulators and reflectors**

(30) Priority: 19.06.2003 KR 2003039818
(71) Applicant: Samsung Electronics Co., Ltd., Suwon-si, Gyeonggi-do (KR)
(72) Inventor: Kim, Jong-Kwon Samsung Electronics Co., Ltd., Suwon-si Gyeonggi-do (KR); Koh, Jun-Ho Samsung Electronics Co., Ltd., Suwon-si Gyeonggi-do (KR); Oh, Yun-Je Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is an optical add/drop multiplexer connected to an optical fiber for transmission of a multiplexed optical signal, and adapted to add a channel to the optical signal or to drop a channel from the optical signal. The optical add/drop multiplexer includes a wavelength division multiplexing/ demultiplexing (WDM) unit connected to the optical fiber, having input and output ports providing a path for a multiplexed optical signal, and a plurality of demultiplexing ports respectively providing paths for demultiplexed channels. A plurality of add/drop multiplexer (ADM) units respectively connected to the demultiplexing ports of the WDM unit, each of the ADM units including first and second circulators each adapted to output a channel, input to a higher-order port thereof, to a lower-order port, and a reflector for passing or reflecting a channel inputted thereto. The first circulator receives a channel at a second port and outputs the channel to a third port connected to the reflector. The first circulator receives, at the third port, the channel from the reflector, and outputs the secondarily received channel to a fourth port, thereby dropping the channel. The second circulator receives a channel at a first port, outputs the received channel to a second port connected to the reflector, receives, at the second port thereof, the channel from the reflector, and outputs the secondarily received channel to a third port connected to a first port of the first circulator, thereby adding the channel.

## Description

### BACKGROUND OF THE INVENTION

### 1. Field of the Invention

The present invention relates to a wavelength division multiplexing system, and more particularly, to an optical add/drop multiplexer (ADM) for adding or dropping a predetermined channel with respect to a multiplexed optical signal.

### 2. Description of the Related Art

With recent use of a wavelength division multiplexing (WDM) technique adapted to transmit a plurality of channels of different wavelengths through a single optical fiber, it has become possible to transmit a large quantity of data at a high speed. Also, optically setting or switching paths of optical signals, or adding or dropping of optical signals has also been made possible with the development of optical element techniques. As a result, an optical communication network based on the WDM technique has become possible.

Typically, an ADM includes a pair of wavelength division multiplexers/demultiplexers, and a plurality of optical switches. For each wavelength division multiplexer/demultiplexer, an arrayed-waveguide grating (AWG) is used which can achieve an optical signal channel extension and simple control while having a high degree of integration. For each optical switch, a 2x2 space switch or an optical fiber Bragg grating (FBG) having a wavelength dependency is used.

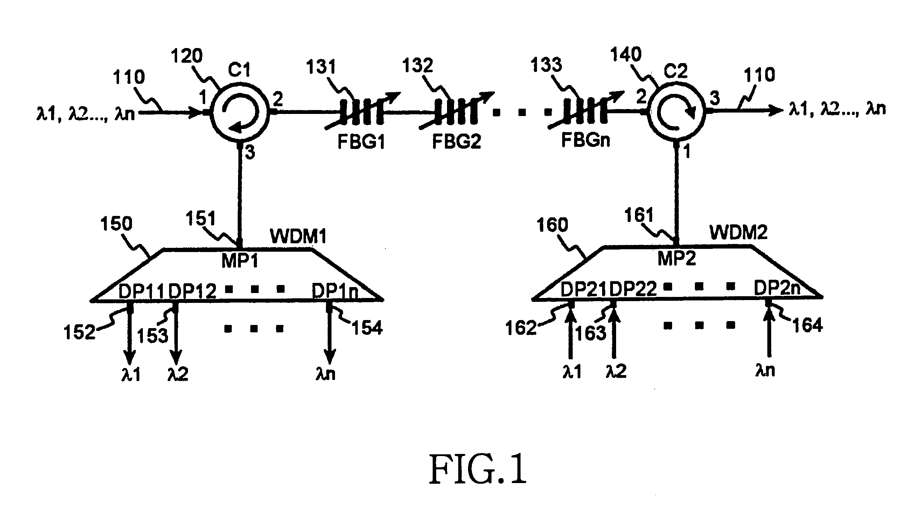

Fig. 1 is a schematic diagram illustrating the configuration of a conventional ADM. As shown in Fig. 1, the ADM includes two circulators 120,140, each connected to an optical fiber 110 and having a plurality of ports. The ADM also includes n fiber Bragg gratings (FBGs) 131 to 133, and two wavelength division multiplexers/demultiplexers 150,160. Where it is assumed that each of the circulators 120 and 140 is designated by a reference numeral "###", its m-th port is designated by "m" in Fig. 1 while being designated, in the following description, by a reference numeral "###m", for easy understanding of the description. Multiplexed optical signals respectively input to and output from the ADM have a plurality of channels with different wavelengths. For example, the n-th channel λn of an input or output multiplexed optical signal has an n-th wavelength.

The first circulator 120 has three ports 1201 to 1203. The first circulating circulator 120 operates to output an optical signal, inputted to a higher-order port thereof, to a lower-order port thereof arranged adjacent to the higher-order port. For example, the first circulating circulator 120 outputs an optical signal, input at the first port 1201, to its second port 1202 The first circulator 120 also outputs a channel, input at the second port 1202, to the third port 1203.

The n FBGs 131 to 133 are connected between the second ports 1202,1402 of the two circulators 120,140. In accordance with an ON or OFF state thereof, each of the n FBGs 131 to 133 reflect the channel of a predetermined wavelength (ON state) while passing the channel of the predetermined wavelength (OFF state). For example, the second FBG 132 reflects only the second channel λ2 in the ON state, whereas the n-th FBG 133 reflects only the n-th channel λn.

The WDM1 150 has a multiplexing port (MP) 151 and n demultiplexing ports (DP) 152 to 154. The WDM1 150 is connected at the multiplexing port 151 to the third port 1203 of the first circulator 120. The WDM1 150 operates to output channels of different wavelengths, input to the multiplexing port 151, to the demultiplexing ports corresponding to respective wavelengths of the input channels. For example, the WDM1 150 outputs the second channel λ2, input to the multiplexing port 151, to the second demultiplexing port 153, while outputting the n-th channel λn, input to the multiplexing port 151, to the n-th demultiplexing port 154.

The second circulator 140 has threeports 1401 to 1403. The second circulator 140 operates to output an optical signal, input to a higher-order port thereof, to a lower-order port thereof arranged adjacent to the higher-order port. For example, the second circulator 140 outputs a channel, input to the first port 1401, to the second port 1402, while outputting an optical signal, input to the second port 1402, to the third port 1403.

The WDM2 160 has a multiplexing port (MP) 161 and n demultiplexing ports (DP) 162 to 164. The WDM1 150 is connected at the multiplexing port 161 to the first port 1401 of the second circulator 140. The WDM2 160 operates to output channels of different wavelengths, input to the demultiplexing ports 162 to 164, to the multiplexing port 161.

Below, operation of the ADM will be described in conjunction with the case of dropping the first channel λ1 from an optical signal input to the ADM, while adding a second channel λ2 to the input optical signal.

The first and second FBGs 131,132 are set to be in the ON state by a control unit (not shown), which also sets the remaining FBGs including the n-th FBG 133 to the OFF state. The first circulator 120 outputs an optical signal, input at the first port 1201, to the second port 1202 connected to the first FBG 131. The first FBG 131 reflects only the first one of the channels of the optical signal received from the second port 1202 of the first circulator 120, that is, the channel λ1. The first circulator 120 outputs the first channel λ1, input to the second port 1202, to the third port 1203 connected to the multiplexing port 151 of the WDM 150.

The WDM1 150 outputs, to the first demultiplexing port 152, the first channel λ1 input to the multiplexing port 151. The optical signal passing through the n FBGs 131 to 133 is input to the second port 1402 of the second circulator 140. The WDM2 161 receives a second channel λ2 at the second demultiplexing port 163, and outputs the received second channel X2 to the multiplexing port 161 connected to the first port of the second circulator 160. The second circulator 160 outputs the second channel X2, input to the first port 1401, to the second port 1402. The second FBG 132 reflects the second channel λ2 inputso that the second channel λ2 is directed to the second port 1402 of the second circulator 140. The second circulator 140 then outputs, to the third port 1403, the second channel λ2 input to the second port 1402.

In the above mentioned conventional ADM, the FBGs 131 to 133 are connected in series. Accordingly, the number of FBGs in this ADM depends on the wavelength to be processed in the ADM. For example, if it is desired to drop the first channel λ1, only one FBG, the first FBG 131, may be used since the first channel λ1 can be reflected by the first FBG 131. However, where it is desired to drop the third channel λ3, this channel is dropped after passing through the first and second FBGs 131 and 132. A similar procedure is carried out in the case of adding a desired channel. If a channel to be added or dropped passes through one FBG, as mentioned above, it undergoes optical loss. For this reason, the channel, which is subjected to an add or drop procedure, has electric power that varies depending on the wavelength thereof. Meanwhile, control of each FBG is typically achieved by controlling ambient temperature or tension to be applied. However, since the time required for such a control is relatively long, it is difficult to achieve a high-speed switching operation.

### SUMMARY OF THE INVENTION

Therefore, the present invention has been made in view of the above mentioned problems involved with the related art, and an object of the invention is to provide an ADM which operates irrespective of the wavelength of a channel to be added or dropped, while being capable of achieving a high-speed operation thereof.

Another object of the invention is to provide an ADM which has a simple configuration, while being capable of being inexpensively manufactured, as compared to conventional cases.

In accordance with one aspect, the present invention provides an optical add/drop multiplexer connected to an optical fiber for transmission of a multiplexed optical signal, and adapted to add a channel to the optical signal or to drop a channel from the optical signal. The optical add/drop multiplexer includes a wavelength division multiplexing/demultiplexing (WDM) unit connected to the optical fiber, having input and output ports providing a path for a multiplexed optical signal. The WDM unit also has a plurality of demultiplexing ports respectively providing paths for demultiplexed channels. A plurality of add/drop multiplexer (ADM) units respectively connected to the demultiplexing ports of the WDM unit. Each of the ADM units including first and second circulators adapted to output a channel, input to a higher-order port thereof, to a lower-order port arranged adjacent to the higher-order port. A reflector for passing or reflecting a channel inputted thereto.

The first circulator receives a channel at a second port and outputs the received channel to a third port connected to the reflector. The first circulator secondarily receives, at the third port, the channel from the reflector and outputs the secondarily received channel to a fourth port thereof, thereby dropping the channel The second circulator receives a channel at a first port and outputs the received channel to a second port connected to the reflector. The second circulator secondarily receives, at the second port, the channel from the reflector and outputs the secondarily received channel to a third port thereof connected to a first port of the first circulator, thereby adding the channel.

In accordance with another aspect, the present invention provides an optical add/drop multiplexer connected to an optical fiber for transmission of a multiplexed optical signal, and adapted to add a channel to the optical signal or to drop a channel from the optical signal. The optical add/drop multiplexer includes a wavelength division multiplexing/ demultiplexing (WDM) unit connected to the optical fiber, having input and output ports providing a path for a multiplexed optical signal. The WDM also has a plurality of demultiplexing ports respectively providing passages for demultiplexed channels. A plurality of add/drop multiplexer (ADM) units respectively connected to the demultiplexing ports of the WDM unit. Each of the ADM units including a circulator adapted to output a channel, input to a higher-order port thereof, to a lower-order port thereof arranged adjacent to the higher-order port. A reflector connected between two selected ports of the circulator, and adapted to pass or reflect a channel inputted thereto.

The circulator receives a channel at a second port and outputs the received channel to a third port thereof connected to the reflector. The circulator also secondarily receives, at the third port, the channel from the reflector and outputs the secondarily received channel to a fourth port thereof, thereby dropping the channel. The circulator also receives a channel at a fifth port and outputs the received channel to a first port connected to the reflector, and secondarily receives, at the first port , the channel from the reflector, thereby adding the channel.

### BRIEF DESCRIPTION OF THE DRAWINGS

The above objects and advantages of the present invention will become more apparent by describing in detail preferred embodiments thereof with reference to the attached drawings in which:
Fig. 1 is a schematic diagram illustrating the configuration of a conventional ADM;
Fig. 2 is a schematic diagram illustrating the configuration of an ADM according to a first embodiment of the present invention;
Figs. 3a and 3b are schematic diagrams for explaining operations of an n-th ADM unit shown in Fig. 2, respectively;
Fig. 4 is a schematic diagram illustrating the configuration of an ADM according to a second embodiment of the present invention; and
Figs. 5a and 5b are schematic diagrams for explaining operations of an n-th ADM unit shown in Fig. 4, respectively.

### DETAILED DESCRIPTION OF THE PREFERRED EMBODIMENT

Now, preferred embodiments of the present invention will be described in detail with reference to the annexed drawings. In the following description of the present invention, a detailed description of known functions and configurations incorporated herein will be omitted when it may make the subject matter of the present invention rather unclear.

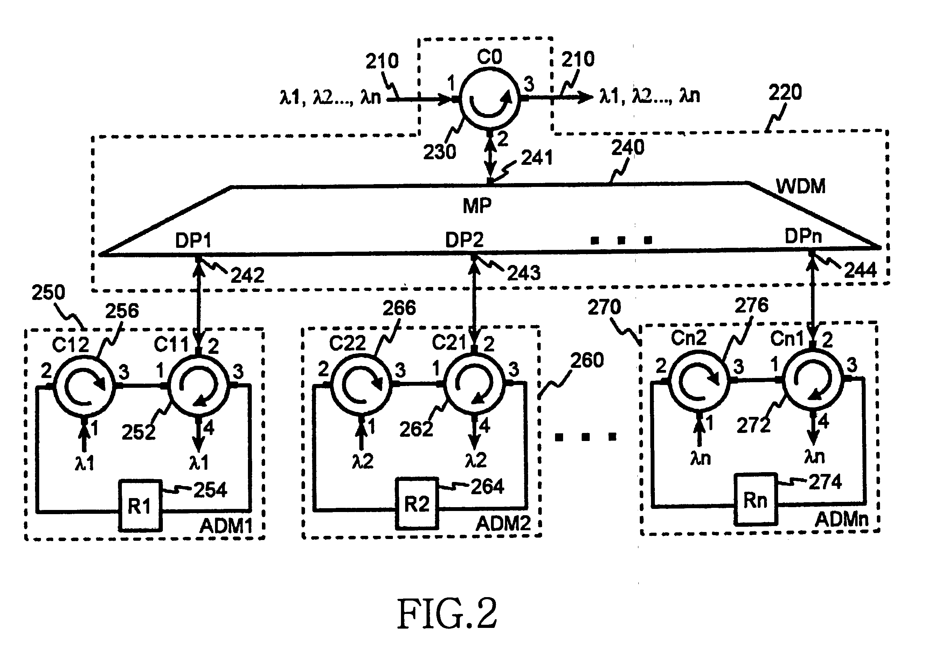

Referring to Figs. 2 to 5b, ADMs are illustrated, respectively. Each ADM has circulators each having a plurality of ports. Where it is assumed that each circulator is designated by a reference numeral "###", its m-th port is designated by "m" in the drawings while being designated, in the following description, by a reference numeral "###m". Multiplexed optical signals respectively inputted to and outputted from the ADM have a plurality of channels with different wavelengths. For example, the n-th channel λn of an input or output multiplexed optical signal has an n-th wavelength.

Fig. 2 is a schematic diagram illustrating the configuration of an ADM according to a first embodiment of the present invention. As shown in Fig. 2, the ADM includes a wavelength division multiplexing/demultiplexing (WDM) unit 220 and n ADM units 250, 260,270 connected to the WDM unit 220.

The WDM unit 220 includes an end circulator 230, and a wavelength division multiplexer/demultiplexer 240.

The end circulator 230 has three ports 2301 to 2303. The end circulator 230 is connected at the first and third ports 2301,2303 to an optical fiber 210 for transmission of a multiplexed optical signal. The end circulator 230 is also connected at the second port 2302 to a multiplexing port 241 of the WDM 240. The end circulator 230 outputs, to the second port 2302, a multiplexed optical signal input to the first port 2301, while outputting, to the third port 2303, an optical signal input to the second port 2302.

The multiplexing port 241 of the WDM 240 serves as a path for a multiplexed optical signal. In addition to the multiplexing port 241, the WDM 240 has n demultiplexing ports 242 to 244 respectively serving as paths for demultiplexed channels. The WDM 240 demultiplexes an optical signal, input to its multiplexing port 241, into channels of different wavelengths and outputs the respective channels to the demultiplexing ports 242 to 244 respectively corresponding to those of the channels. For example, the WDM 240 outputs the second channel X2 to its second demultiplexing port 243, while outputting the n-th channel λn to the n-th demultiplexing port 244. The WDM 240 also multiplexes a plurality of channels with different wavelengths respectively input to the n demultiplexing ports 242 to 244, and outputs the resultant multiplexed optical signal to the multiplexing port 241. For the WDM 240, an arrayed waveguide grating may be used which easilyachieves an optical signal channel extension and a simple control while having a high degree of integration.

The n ADM units 250, 260,270 are connected to the n demultiplexing ports 242 to 244 of the WDM 240, respectively. Each of the n ADM units includes a pair of circulators: 252,256 in the case of the ADM unit 250; 262,266 in the case of the ADM unit 260; and 272,276 in the case of the ADM unit 270. Each of the ADM units also include a reflector: 254 in the case of the ADM unit 250; 264 in the case of the ADM unit 260; and 274 in the case of the ADM unit 270. Since the n ADM units have the same configuration, a description will be given only in conjunction with the first ADM unit 250.

The first circulator 252 of the first ADM unit 250 has four ports 2521 to 2524. This first circulator 252 operates to output a channel, input to a higher-order port, to a lower-order port arranged adjacent to the higher-order port. The first circulator 252 is connected at the second port 2522 to a corresponding demultiplexing port of the WDM 240, the first demultiplexing port 242. The first circulator 252 outputs, to the third port 2523, a first channel λ1 input to the second port 2522. The first circulator 252 outputs, to the fourth port 2524, the first channel λ1 if reflected back to the third port 2523, thereby dropping the first channel λ1.

The reflector 254 of the first ADM unit 250 is connected to the third port 2532 of the first circulator 252 and the second port 2562 of the second circulator 256. In accordance with an ON or OFF state thereof, the reflector 254 reflects or passes a channel inputted thereto. For the reflector 254, a wavelength-independent double-sided reflector may be used which has a transmissivity varying in accordance with a control signal applied thereto.

The second circulator 256 has three ports 2561 to 2563. The second circulator 256 outputs a first channel λ1, input to the first port 2561, to the second port 2562. The second circulator 256 also outputs the first channel λ1, if reflected back to the second port 2562, to the third port 2563, thereby adding the first channel λ1.Below, operation of the ADM will be described in conjunction with the case of, for example, dropping a first channel λ1 from an input optical signal, and then adding another first channel λ1 to the optical signal.

The reflector 254 of the first ADM unit 250 is put in the ON state by a control unit (not shown), whereas respective reflectors of the second through n-th ADM units 260 to 270 are placed in the OFF state by the control unit. For simplification of description, respective reflectors of the n ADM units 250 to 270,are referred to as n reflectors.

First, the channel dropping operation of the first ADM unit 250 will be described. The end circulator 230 outputs an optical signal, input to the first port 2301, to the second port 2302 connected to the multiplexing port 241 of the WDM 240. The WDM 240 demultiplexes the optical signal input thereto, and then outputs the resultant demultiplexed channels to respective demultiplexing ports 242 to 244 corresponding to the different wavelengths of the channels. That is, the first channel λ1 of the optical signal is output to the first demultiplexing port 242 connected to the first circulator 252 of the first ADM unit 250. The first circulator 252 outputs the first channel λ1, input to the second port 2522, to the third port 2523 connected to the first reflector 254. The first reflector 254 reflects the first channel λ1 back the third port 2523 of the first circulator 252. The first circulator 252 outputs the secondarily-input first channel λ1 to the fourth port 2524, thereby dropping the first channel λ1. Next, the channel adding operation of the first ADM unit 250 will be described. The second circulator 256 outputs a first channel λ1, input to the first port 2561, to the second port 2562 connected to the first reflector 254. The first reflector 254 reflects the first channel λ1 back to the second port 2562 of the second circulator 256. The second circulator 256 outputs the secondarily-input first channel λ1 to the third port 2524 connected to the first port 2521 of the first circulator 252. The first circulator 252 outputs the first channel λ1, input to its first port 2521, to the second port 2522 connected to a corresponding demultiplexing port of the WDM 240, the first demultiplexing port 242. Thus, the WDM 240 receives a plurality of channels with different wavelengths from the n ADM units 250 to 270 at the n demultiplexing ports 242 to 244, respectively, multiplexes the received channels and outputs the resultant multiplexed optical signal to the multiplexing port 241. The end circulator 230 receives the optical signal from the WDM 240 at the second port 2302, and outputs the received optical signal to the third port 2303.

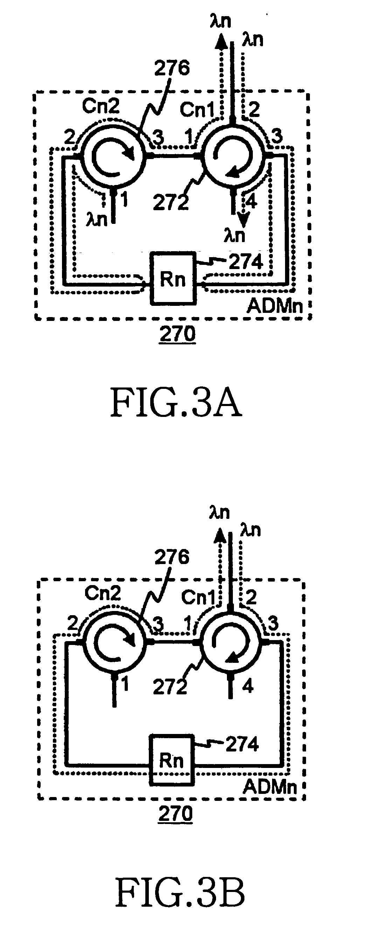

Figs. 3a and 3b are schematic diagrams for explaining operations of the n-th ADM unit shown in Fig. 2, respectively.

Fig. 3a illustrates the operation of the n-th ADM unit 270 for dropping a n-th channel λn, and then adding another n-th channel λn. First, the channel dropping operation will be described. For this operation, the n-th reflector 274 is maintained in the ON state. The first circulator 272 outputs an n-th channel λn, input to the second port 2722, to the third port 2723 connected to the n-th reflector 274. Since the n-th reflector 274 is in the ON state, it reflects the n-th channel λn back to the third port 2723 of the first circulator 272 in the n-th ADM unit 270. The first circulator 272 outputs the secondarily-input n-th channel λn to the fourth port 2724, thereby dropping the n-th channel λn.

Next, the channel adding operation will be described. The second circulator 276 of the n-th ADM unit 276 outputs an n-th channel λn, input to the first port 2761, to the second port 2762 connected to the n-th reflector 274. The n-th reflector 274 reflects the n-th channel λn back to the second port 2762 of the second circulator 276. The second circulator 276 outputs the secondarily-input n-th channel λn to the third port 2763 connected to the first port 2721 of the first circulator 272. The first circulator 272 outputs the n-th channel λn, input to the first port 2721, to the second port 2722, thereby adding the n-th channel λn.

Fig. 3b illustrates the operation of the n-th ADM unit 270 for passing an n-th channel λn. For this operation, the n-th reflector 274 is maintained in the OFF state. The first circulator 272 outputs an n-th channel λn, input to the second port 2722, to the third port 2723. Since the n-th reflector 274 is in its OFF state, it passes the n-th channel λn input thereto, so that the n-th channel λn is input to the second port 2762 of the second circulator 276. The second circulator 276 then outputs the n-th channel λn to the third port 2763 connected to the first port 2721 of the first circulator 272. The first circulator 272 outputs the n-th channel λn, input to the first port 2721, to the second port 2722.

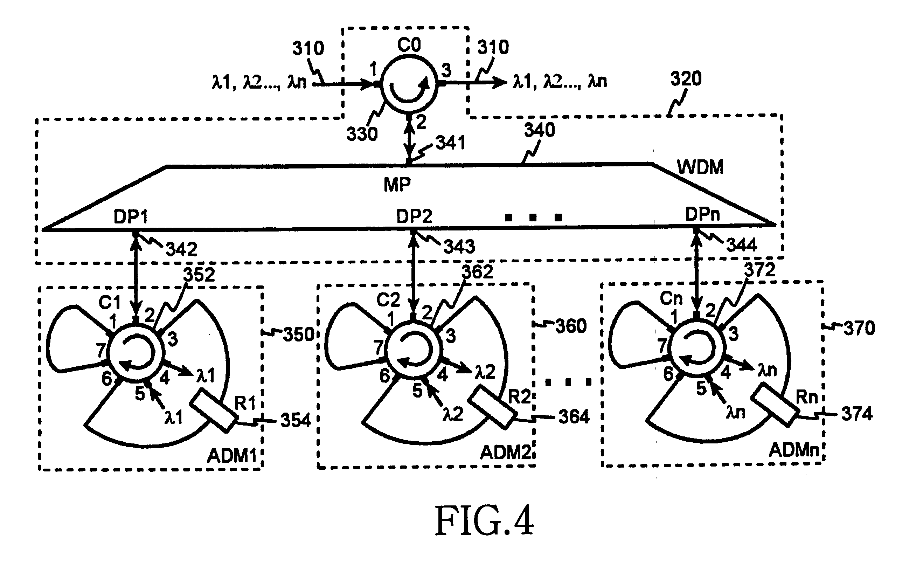

Fig. 4 is a schematic diagram illustrating the configuration of an ADM according to a second embodiment of the present invention. As shown in Fig. 4, the ADM includes a wavelength division multiplexing/demultiplexing (WDM) unit 320, and n ADM units, 350, 360,370. This ADM has a similar configuration to that of Fig. 2, except for the configurations of the n ADM units 350, 360, 370, so that duplicate description will be omitted.

The n ADM units 350, 360,370 are connected to the n demultiplexing ports 342 to 344 of the WDM 340, respectively. Each of the n ADM units includes a circulator: 352 in the case of the ADM unit 350; 362 in the case of the ADM unit 360; and 372 in the case of the ADM unit 370. Each of the n ADM units includes a reflector: 354 in the case of the ADM unit 350; 364 in the case of the ADM unit 360; and 374 in the case of the ADM unit 370. Since the n ADM units have the same configuration, the description will be given only in conjunction with the first ADM unit 350.

The first circulator 352 of the first ADM unit 350 has seven ports 3521 to 3527. The first circulator 352 operates to output a channel, input to a higher-order port thereof, to a lower-order port thereof arranged adjacent to the higher-order port. The first circulator 352 is connected at the second port 3522 to a corresponding demultiplexing port of the WDM 340, the first demultiplexing port 342. The first circulator 352 outputs, to the third port 3523, a first channel λ1 input to the second port 3522. The first circulator 352 outputs, to the fourth port 3534, the first channel λ1 if reflected back to the third port 3523, thereby dropping the first channel λ1. The first circulator 352 also outputs, to the sixth port 3526, a first channel λ1 input to the fifth port 3525. The first circulator 352 outputs, to the seventh port 3527, the first channel λ1 if reflected back to the sixth port 3526. The seventh port 3527 of the first circulator 352 is connected to the first port 3521, so that the first circulator 352 outputs the first channel λ1, input to the first port 3521, to the second port 3522, thereby adding the first channel λ1.

The reflector 354 of the first ADM unit 350 is connected to the third and sixth ports 3523,3526 of the first circulator 352. In accordance with an ON or OFF state thereof, the reflector 354 reflects or passes a channel input thereto. For the reflector 354, a wavelength-independent double-sided reflector may be used which has a transmissivity varying in accordance with a control signal applied thereto.Below, operation of the ADM will be described in conjunction with the case of, for example, dropping a first channel λ1 from an input optical signal, and then adding another first channel λ1 to the optical signal.

The reflector 354 of the first ADM unit 350 is placed in the ON state by a control unit (not shown), whereas respective reflectors of the second through n-th ADM units 360 to 370 are placed in the OFF state by the control unit. For simplification of description, respective reflectors of the n ADM units 350 to 370are referred to as n reflectors. Also, respective circulators of the n ADM units 350 to 370are referred to as n circulators.

First, the channel dropping operation of the first ADM unit 350 will be described. The end circulator 330 of the WDM unit 320 outputs an optical signal, input to the first port 3301, to the second port 3302 connected to the multiplexing port 341 of the WDM 340. The WDM 340 demultiplexes the optical signal input thereto, and then outputs the resultant demultiplexed channels to respective demultiplexing ports 342 to 344 corresponding to the different wavelengths of the channels. That is, the first channel λ1 of the optical signal is output to the first demultiplexing port 342 connected to the first circulator 352. The first circulator 352 outputs the first channel λ1, input to the second port 3522, to the third port 3523 connected to the first reflector 354. The first reflector 354 reflects the first channel λ1 back to the third port 3523 of the first circulator 352. The first circulator 352 outputs the secondarily-input first channel λ1 to the fourth port 3534, thereby dropping the first channel λ1.

The first circulator 352 also outputs a first channel λ1, input to the fifth port 3525, to the sixth port 3526 connected to the first reflector 354. The first reflector 354 reflects the first channel λ1 back to the sixth port 3526 of the first circulator 352. The first circulator 352 outputs the secondarily-input first channel λ1 to the seventh port 3537 connected to the first port 3521, so that it outputs the first channel λ1 to the second port 3522 connected to a corresponding demultiplexing port of the WDM 340, the first demultiplexing port 342. Thus, the WDM 340 receives a plurality of channels with different wavelengths from the n ADM units 350 to 370 at its n demultiplexing ports 342 to 344, multiplexes the received channels, and outputs the resultant multiplexed optical signal to the multiplexing port 341. The end circulator 330 receives the optical signal from the WDM 340 at the second port 3302, and outputs the received optical signal to the third port 3303.

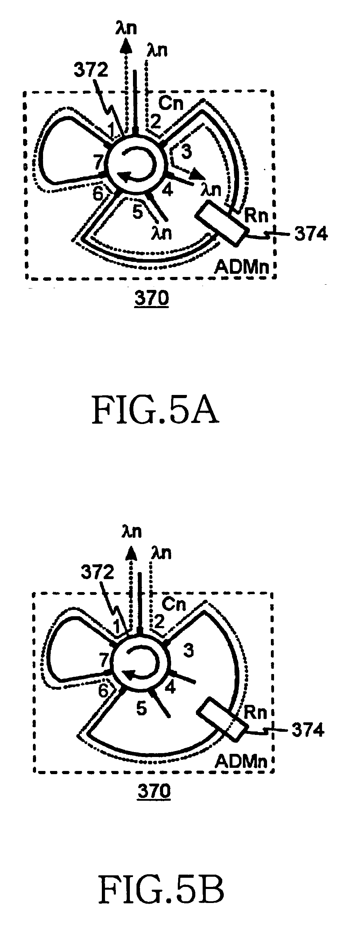

Figs. 5a and 5b are schematic diagrams for explaining operations of the n-th ADM unit shown in Fig. 4, respectively.

Fig. 5a illustrates the operation of the n-th ADM unit 370 for dropping an n-th channel λn, and then adding another n-th channel λn. First, the channel dropping operation will be described. For this operation, the n-th reflector 374 is maintained in the ON state. The n-th circulator 372 outputs a n-th channel λn, input to the second port 3722, to the third port 3723 connected to the n-th reflector 374. Since the n-th reflector 374 is in its ON state, it reflects the n-th channel λn back to the third port 3723 of the n-th circulator 372. The first circulator 372 outputs the secondarily-input n-th channel λn to the fourth port 3734, thereby dropping the n-th channel λn.

Next, the channel adding operation will be described. The n-th circulator 372 outputs an n-th channel λn, input to the fifth port 3725, to the sixth port 3726 connected to the n-th reflector 374. The n-th reflector 374 reflects the n-th channel λn back to the sixth port 3726 of the n-th circulator 372. The n-th circulator 372 outputs the secondarily-input n-th channel λn to the seventh port 3727 connected to the first port 3721. The n-th circulator 372 outputs the n-th channel λn, input to the first port 3721, to the second port 3722, thereby adding the n-th channel λn.

Fig. 5b illustrates the operation of the n-th ADM unit 370 for passing a n-th channel λn. For this operation, the n-th reflector 374 is maintained in the OFF state. The n-th circulator 372 outputs a n-th channel λn, input to the second port 3722, to the third port 3723. Since the n-th reflector 374 is in its OFF state, it passes the n-th channel λn input thereto, so that the n-th channel λn is input to the sixth port 3726 of the n-th circulator 372. The n-th circulator 372 then outputs the n-th channel λn to the seventh port 3727 connected to its first port 3721. The n-th circulator 372 subsequently outputs the n-th channel λn, input to its first port 3721, to the second port 3722.

As apparent from the above description, the ADM according to the present invention has advantages in that it operates, irrespective of the wavelength of a channel being added or dropped, while achieving a high-speed operation and an easy control thereof, because it uses circulators, which are passive elements, and wavelength-independent reflectors.

Also, the ADM according to the present invention can minimize the use of additional elements such as temperature control elements, while having a simple and inexpensive configuration, by virtue of the use of the circulators and wavelength-independent reflectors.

While this invention has been described in connection with what is presently considered to be the most practical and preferred embodiment, it is to be understood that the invention is not limited to the disclosed embodiment, but, on the contrary, it is intended to cover various modifications within the spirit and scope of the appended claims.

## Claims

1. An optical add/drop multiplexer connected to an optical fiber (210, 310) for transmission of a multiplexed optical signal, comprising:
a wavelength division multiplexing/demultiplexing unit (220, 320) connected to the optical fiber (210, 310) having input and output ports providing a path for a multiplexed optical signal, and a plurality of demultiplexing ports (242, 243, 244, ..., 342, 343, 344, ...) respectively providing paths for demultiplexed channels; and
a plurality of add/drop multiplexer units (250, 260, 270, ..., 350, 360, 370, ...) respectively connected to the demultiplexing ports (242, 243, 244,.., 342, 343, 344, ...) of the wavelength division multiplexing/demultiplexing unit (220, 320).

2. The optical add/drop multiplexer according to claim 1, wherein each of the add/drop multiplexer units (250, 260, 270, ..., 350, 360, 370, ...) including a circulator unit, and a reflector (254, 264, 274, ..., 354, 364, 374, ...) for passing or reflecting a channel input thereto being connected with two different ports of the circulator unit.

3. The optical add/drop multiplexer according to claim 2, wherein the reflector (254, 264, 274, ..., 354, 364, 374, ...) is operable in an ON state and an OFF state corresponding to reflect a channel and to pass a channel, whereby the reflector (254, 264, 274, ..., 354, 364, 374, ...) is capable to switch between ON state and OFF state.

4. The optical add/drop multiplexer according to claim 2 or 3, wherein the circulator unit comprises a first circulator (252, 262, 272,...) and a second circulator (256, 266, 276,...) adapted to output a channel, input to one port, to another port.

5. The optical add/drop multiplexer according to claim 4, wherein the first circulator (252, 262, 272,...) is adapted to receive a channel at a second port, to output the channel to a third port connected to the reflector (254, 264, 274, ...), to receive the channel from the reflector (254, 264, 274, ...) at the third port, and to output the channel to a fourth port, thereby dropping the channel.

6. The optical add/drop multiplexer according to claim 4 or 5, wherein the second circulator (256, 266, 276,...) is adapted to receive a channel at a first port, to output the channel to a second port connected to the reflector (254, 264, 274, ...), to receive the channel from the reflector (254, 264, 274, ...) at the second port, and to output the channel to a third port connected to a first port of the first circulator (252, 262, 272,...), thereby adding the channel.

7. The optical add/drop multiplexer according to claim 4, wherein a channel passing through the add/drop multiplexer unit (250, 260, 270, ...) sequentially passes through the second and third ports of the first circulator (252, 262, 272,...), the reflector (254, 264, 274,...), the second and third ports of the second circulator (256, 266, 276,...), and the first and second ports of the first circulator (252, 262, 272,...).

8. The optical add/drop multiplexer according to claim 2 or 3, wherein the circulator unit comprises a circulator (352, 362, 372, ...) adapted to output a channel, input to one port, to another port.

9. The optical add/drop multiplexer according to claim 8, wherein the circulator (352, 362, 372, ...) is adapted to receive a channel at a second port, to output the channel to a third port connected to the reflector (354, 364, 374, ...), to receive the channel from the reflector (354, 364, 374, ...) at the third port, and to output the channel to a fourth port thereof, thereby dropping the channel,.

10. The optical add/drop multiplexer according to claim 8 or 9, wherein the circulator (352, 362, 372, ...) is adapted receive a channel at a fifth port, to output the channel to a first port connected to the reflector (354, 364, 374, ...), and to receive the channel from the reflector (354, 364, 374, ...) at the first port, thereby adding the channel.

11. The optical add/drop multiplexer according to claim 8 wherein a channel passing through the add/drop multiplexer unit (350, 360, 370, ...) sequentially passes through the second and third ports of the circulator (352, 362, 372, ...), the reflector (354, 364, 374, ...), and the first and second ports of the circulator (352, 362, 372, ...).

12. The optical add/drop multiplexer according to any one of the preceding claims, wherein the wavelength division multiplexer/demultiplexer unit (220, 320) comprises:
an end circulator (230, 330) having first through third ports and adapted to output an optical signal, input to a port, to another port, the first and third ports of the end circulator connected to the optical fiber (210, 310) for transmission of the multiplexed optical signal; and
a wavelength division multiplexer/demultiplexer (240, 340) having a multiplexing port (241, 341) connected to the second port of the end circulator (230, 330) and providing a path for a multiplexed optical signal, and a plurality of demultiplexing ports (242, 243, 244, ..., 342, 343, 344, ...) respectively providing paths for demultiplexed channels.

13. The optical add/drop multiplexer according to any one of the preceding claims, wherein the wavelength division multiplexer/demultiplexer (240, 340) comprises an arrayed waveguide grating.
